# EUROPEAN PATENT APPLICATION

(11) **EP 1 991 003 A2**
(43) Date of publication of application: **12.11.2008**
(21) Application number: 08154564.2
(22) Date of filing: 15.04.2008
(51) Int. Cl.: H04N 7/24

(54) **Data reproducing apparatus and data reproducing method**

(30) Priority: 16.04.2007 KR 20070037109
(71) Applicant: Samsung Electronics Co., Ltd., Suwon-si, Gyeonggi-do (KR)
(72) Inventor: Lee, Jong Kerl, Gyeonggi-do (KR); Kang, Jae Sung, Gyeonggi-do (KR)
(74) Representative: Harrison Goddard Foote

(57) **Abstract**

The present invention relates to a data reproducing apparatus and a data reproducing method. The data reproducing apparatus and the data reproducing method receive data using a file transfer channel and assist a user reproduce the data at a desired time. The present invention includes at least one of receiving data transferred through a file transfer channel of a broadcasting network, storing the data, reproducing the data at a time desired by a user, i.e. according to selection through a menu or a list, and reproducing the data while displaying a broadcast, and reproducing the data while switching a channel.

## Description

### BACKGROUND OF THE INVENTION

### 1. Field of the Invention:

The present invention relates generally to a data reproducing apparatus and a data reproducing method. More particularly, the present invention relates to a data reproducing apparatus and method, which can receive and store data such as a video clip transferred through a broadcasting network in order to allow a user watch the data at a desired time.

### 2. Description of the Related Art:

The term "portable terminal" refers to a mobile communication device that enables its user to perform various communication functions while in motion. In recent years, portable terminals have been widely used. Examples of such portable terminals include MP3 players, Digital Multimedia Broadcasting (DMB) terminals and Portable Media Player (PMP) terminals, which enable their users to listen to music, view a television program, and see a movie, respectively. Various technologies and advancements, which have resulted from considerable research and development, have been collectively applied to portable terminals and resulted in significantly improved functionality. In addition, with the development of new materials, portable terminals have become much smaller in size and denser in integration.

Recently, portable terminals have become high-performance products that are comparable to desktop computers in storage capacity and speed.

Currently, especially in light of the capacity and speed of these devices, almost all persons carry their own portable terminal. With such widespread use thereof, more services that provide various types of information to portable terminals are becoming popular and being requested by users. For example, mobile communication service providers are being requested to provide various services and information to portable terminals through existing mobile communication networks.

However, it is difficult to transfer a large amount of data through a conventional mobile communication network because of limited resources such as frequency bandwidth or channel properties. Hence, most mobile communication service providers transmit data of a small volume such as texts and simple images. With these limited resources, it is not easy to satisfy the various requests of users carrying their portable terminals in a timely manner. In particular, these services cannot satisfy requests of users that want to transmit and receive a large amount of data. Therefore, it is necessary to develop an effective means that provides both various services and a large amount of data to users of portable terminals at low cost.

### SUMMARY OF THE INVENTION

An aspect of the present invention is to address at least the above-mentioned problems and/or disadvantages and to provide at least the advantages described below. Accordingly, an aspect of the present invention is to provide a data reproducing apparatus and a data reproducing method that can receive and store data transferred through a broadcasting network and allow a user to watch the data at a desired time.

In accordance with an aspect of the present invention, a data reproducing apparatus is provided. The data reproducing apparatus comprises a broadcast receiver for examining a file transfer channel of a broadcasting network and for receiving data transferred through the examined file transfer channel of the broadcasting network, a memory for storing the received data, a control unit for controlling the stored data to be displayed, and a display unit for displaying the data.

In accordance with another aspect of the present invention, a data reproducing method is provided. The data reproducing method comprises receiving data transferred through a file transfer channel of a broadcasting network examined by using a broadcast receiving module, storing the received data and reproducing the stored data.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a view schematically illustrating a data transmission system according to an exemplary embodiment of the present invention;

FIG. 2 is a view schematically illustrating a data reproducing apparatus according to an exemplary embodiment of the present invention;

FIG. 3 is a view illustrating a pop-up module according to an exemplary embodiment of the present invention in detail;

FIG. 4 is a view illustrating Program Specific Information/Service Information (PSI/SI) information representing program reproduction time and advertisement reproduction time information according to an exemplary embodiment of the present invention;

FIG. 5 is an exemplary view of a screen representing a direct video clip reproduction method according to an exemplary embodiment of the present invention;

FIG. 6 is an exemplary view of a screen illustrating a video clip reproduction method during displaying of a broadcast according to an exemplary embodiment of the present invention;

FIG. 7 is an exemplary view of a screen illustrating a video clip reproduction method during switching of a channel according to an exemplary embodiment of the present invention;

FIG. 8 is an exemplary view of a screen illustrating a pop-up window according to an exemplary embodiment of the present invention;

FIG. 9 is an exemplary view of a screen illustrating another pop-up window according to an exemplary embodiment of the present invention;

FIG. 10 is a flowchart illustrating a data reproducing method according to an exemplary embodiment of the present invention; and

FIG. 11 is a flowchart illustrating a data reproducing method according to another exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Particular terms may be defined herein to assist in describing the invention. However, the meaning of specific terms or words used in the specification and the claims should not be limited to the literal or commonly employed sense, but should be construed in accordance with the spirit of the invention. Also, the description of the various embodiments is to be construed as exemplary and should not be construed as a description of every possible instance of the invention. Rather, it should be understood that various changes may be made and equivalents may be substituted for elements of the invention.

The term "data" as used in the present description may include a text, a video signal, an audio signal, etc. Here, the video signal may include a video clip, a moving picture, User Created Contents (UCC), User Generated Contents (UGC), etc. The video clip may include an audio signal and a text signal, as well as a video signal. While not mandatory, it is preferable that the audio signal is synchronized with the video signal when it is included in the video clip. The text signal may correspond to a caption signal of the video signal when it is included in the video clip. In the following description, a video clip is used as the data. However, the data of the present invention is not limited to the video clip, and various types of data can be applied to the present invention.

Furthermore, the broadcast signal described hereinafter is a signal for reproduction of a channel program provided by a broadcasting network server. The broadcast signal may include a video signal, an audio signal, and a text signal that constitute a program.

The broadcasting network described in the present invention may include various broadcasting networks such as Digital Video Broadcast - Handheld (DVB-H), DMB, etc. More particularly, when the broadcasting network is of a DVB-H type, the data reproducing apparatus can receive the video clip through a file transfer channel. Further, if the broadcasting network is of a DMB type, the data reproducing apparatus can receive the video clip through a channel through which an Electronic Program Guide (EPG) is transferred. Hereinafter, exemplary embodiments of the present invention will be described with reference to a DVB-H broadcasting network. Again, this is merely for ease of description and should not be construed as limiting the bounds of the invention's application.

Although the data reproducing apparatus performing the functions according to exemplary embodiments of the present invention is described as a mobile communication terminal for convenience, the present invention is not limited thereto. That is, although the data reproducing apparatus according to the described exemplary embodiments of the present invention is a terminal capable of receiving a broadcast, it may be any information and communication appliance or multimedia appliance, such as a mobile communication terminal, a DMB receiver, a DVB-H receiver, a wire/wireless phone, a Personal Digital Assistant (PDA), a smart phone, a notebook computer, a personal computer, a 3G terminal such as an International Mobile Telecommunications 2000 (IMT 2000) terminal, a Wideband Code Division Multiple Access (WCDMA) terminal, a Universal Mobile Telecommunications System (UMTS) terminal, and a Global System for Mobile Communications (GSM)/General Packet Radio Services (GPRS) terminal.

Hereinafter, exemplary embodiments for performing the functions of the present invention will be described in more detail with reference to accompanying drawings.

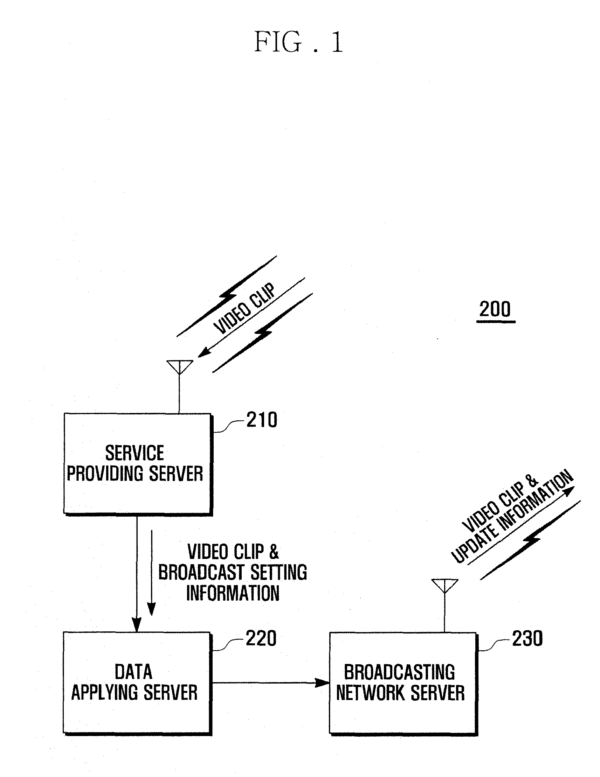

FIG. 1 is a view schematically illustrating a data transmission system according to an exemplary embodiment of the present invention.

Referring to FIG. 1, an exemplary data transmission system 200 of the present invention includes a service providing server 210, a data applying server 220, and a broadcasting network server 230.

The service providing server 210 produces and collects various data such as a video clip. The service providing server 210 produces broadcast setting information about the collected video clip and transfers the video clip and the broadcast setting information to the data applying server 220. Here, the service providing server 210 can collect the video clip from a terminal connected to the Internet, a portable terminal connected through a 3G network, etc. Further, the portable terminal can produce the video clip by editing an image signal photographed using a camera, etc., and can transfer them to the service providing server 210.

The data applying server 220 converts the video clip and the broadcast setting information that have been received from the service providing server 210 for transfer through a broadcasting network. That is, the data applying server 220 converts the files of the video clip to a data format that can be transferred through the broadcasting network. More specifically, the data format that can be transferred through the broadcasting network is a data format that can be reproduced in a data reproducing apparatus. The data applying server 220 can convert the video clip to a file having a resolution enabling reproduction in the data reproducing apparatus or to a file having a reproducible size. The data applying server 220 converts the video clip according to a protocol standard used by the broadcasting network server 230. For example, when the broadcasting server 230 uses a file delivery over unidirectional transport (FLUTE) protocol, it divides the video clip according to the FLUTE protocol or produces header information. The data applying server 220 produces information defining the video clip by using the broadcast setting information. For example, when the broadcasting network is of the DVB-H type, the data applying server 220 produces the broadcast setting information as Electronic Service Guide (ESG) update information by using a standard suitable for the ESG.

The broadcasting network server 230 transfers the video clip and the update information to the data reproducing apparatus according to a protocol. Then, the broadcasting network server 230 can transfer the video clip through a file transfer channel. For example, when the protocol is the FLUTE protocol, the broadcasting network server 230 can transfer the video clip together with the ESG update information through the file transfer channel provided by the FLUTE protocol.

As mentioned above, an exemplary data transmission system of the present invention converts data such as a video clip and broadcast setting information defining the video clip to a form which can be transferred by the broadcasting network server 230. The data transmission system 200 broadcasts the video clip and the broadcasting network setting information through the file transfer channel provided by the broadcasting network server 230. Accordingly, an exemplary data transmission system 200 of the present invention can easily transfer a User Generated Content (UGC) file of a moving picture having a large amount of data, etc. by using a file transfer channel of a broadcasting network.

Meanwhile, an exemplary data reproducing apparatus of the present invention receives the video clip and the update information transferred by the data transmission system. Further, an exemplary data reproducing apparatus of the present invention can alert a user that a new video clip has been received and can reproduce the video clip at a time desired by a user according to a setting. Hereinafter, an exemplary data reproducing apparatus of the present invention will be described in more detail.

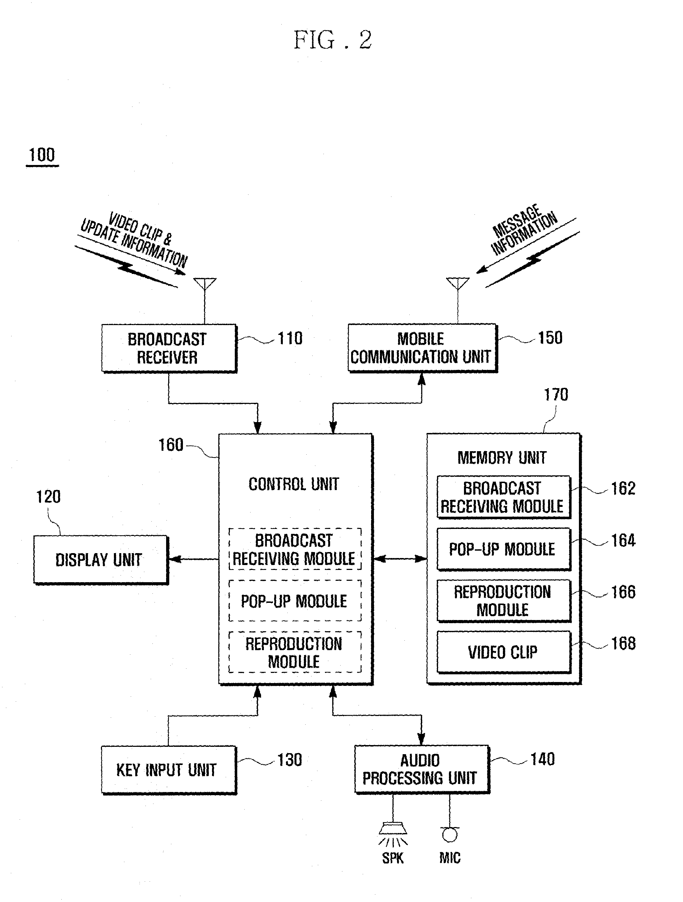

FIG. 2 is a view schematically illustrating an exemplary data reproducing apparatus according to the present invention.

Referring to FIG. 2, a data reproducing apparatus 100 includes a broadcast receiver 110, a key input unit 130, an audio processing unit 140, a memory 170, a display unit 120, and a control unit 160, and may further include a mobile communication unit 150.

The broadcast receiver 110 receives data, such as a video clip, transferred from the broadcasting network server 230 and update information. For this purpose, under the control of the control unit 160 the broadcast receiver 110 sets a channel frequency corresponding to the file transfer channel frequency used by the broadcasting network server 230. The broadcast receiver 110 transfers the received update information and the video clip to the control unit 160.

The control unit 160 evaluates the update information transferred from the broadcast receiver 110 and determines whether there is information to be newly received in the file transfer channel. The control unit 160 determines whether the video clip will be received and stored, according to the update information. If the video clip is updated information, the control unit 160 provides an alert through the display unit 120 and/or the audio processing unit 140. Meanwhile, the control unit 160 can activate a broadcast receiving module 162 in order to receive the video clip and the updated information by using the broadcast receiver 110. The control unit can load the pop-up module 164 to alert reception of the video clip. The control unit 160 can load a reproduction module 166 for reproduction of the video clip or the broadcast signal received according to activation of the broadcast receiving module 162. Also, the control unit can store the video clip in a designated video clip memory region.

That is, the broadcast receiving module 162 is activated under the control of the control unit 160 at certain intervals to control the setting of the broadcast receiver 110, and examines a file transfer channel on the basis of it. If the video clip and the update information are transferred using the file transfer channel, the broadcast receiving module 162 controls the memory 170 to store the transferred video clip and the update information. The broadcast receiving module 162 produces an alert signal informing that the video clip and the update information have been received and transfers it to the pop-up module 164. If there is an input, for example using the key input unit 230, signifying a selection of a user who wants to reproduce the video clip, the video clip is displayed on the display unit 120 through the reproduction module 166. When an input of a user signifying reception of a general broadcast is generated, the broadcast receiving module 162 controls the setting of the broadcast receiver 110 corresponding to the audio and video channels and controls the broadcast signal to be received. When the pop-up module 164 transfers an alert signal for reception of the video clip, the broadcast receiving module 162 is activated to receive the video clip from the file transfer channel of the broadcasting network.

When the pop-up module 164 receives the alert signal, it produces a pop-up window and transfers the pop-up window to the display unit 120. In an exemplary implementation, the pop-up module 164 may not produce the pop-up window according to the setting of a user. The pop-up module 164 may produce the form of the pop-up window on the basis of the update information. That is, when the update information contains form setting data defining the form of the pop-up window, the pop-up module 164 produces the pop-up window on the basis of the form setting data and transfers it to the display unit 120.

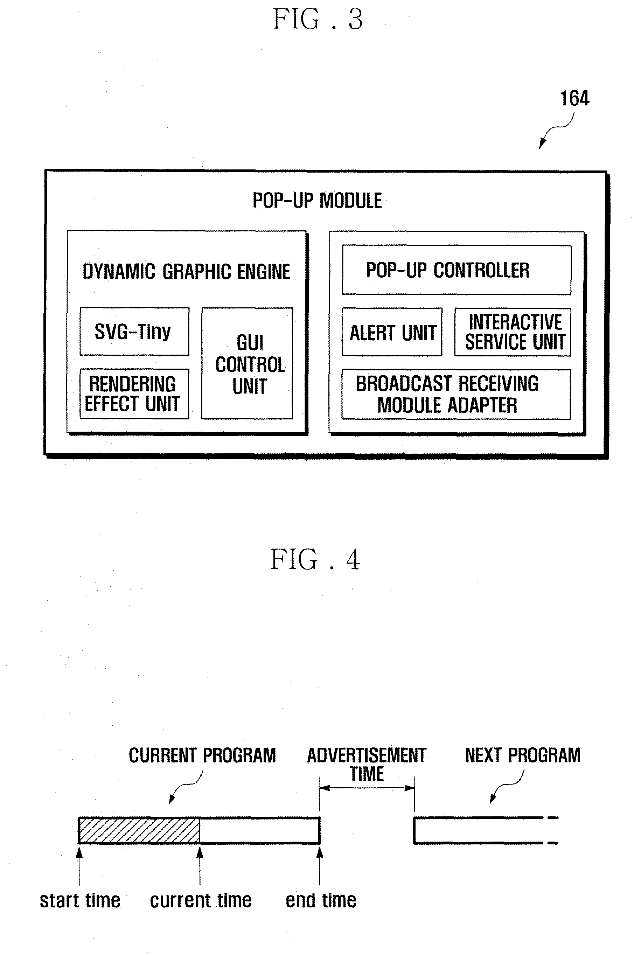

Meanwhile, the pop-up module 164 can determine whether the message information transferred by the mobile communication unit 150 contains the update information. That is, if the mobile communication unit 150 transfers the message information, the pop-up module 164 searches for the message information. When the message information contains the update information, the pop-up module 164 alerts it to the broadcast receiving module 162. Accordingly, the broadcast receiving module 162 receives the video clip defined by the update information by setting the broadcast receiver 110 according to the update information. When the message information does not contain the update information, the pop-up module 164 can display a message according to a general message service. Hereinafter, the pop-up module 164 will be described in detail with reference to FIG. 3.

FIG. 3 is a block diagram schematically illustrating the pop-up module 164 according to an exemplary embodiment of the present invention.

Referring to FIG. 3, a pop-up module 164 includes a dynamic graphic engine having a Scalable Vector Graphics (SVG)-Tiny, a rendering effect unit, and a graphic user interface (GUI) control unit, a pop-up controller, an alert unit, an interactive service unit, and a broadcast receiving module adapter. The SVG-Tiny is a module supporting a vector graphic, e.g. a moving picture such as in a flash format. The rendering effect unit is a module adding rendering effects to a graphic. The GUI control unit is a module controlling a user graphic interface. The pop-up controller is a module controlling the timing for generation of a pop-up window displayed on the display unit 120, the form of the pop-up window, the contents that are to be contained in the pop-up window, etc. The alert unit is a module for alerting the broadcast receiving module 162 that the data transferred in a push type through a mobile communication unit 150 are generated. The interactive service unit may be connected to an external network, and helps the data reproducing apparatus 100 be connected to an external network corresponding to a link when the link displayed in the pop-up window is activated. The broadcast receiving module adapter is an interface for transmission and reception of data to and from the broadcast receiving module 162. The broadcast receiving module adapter may have a security-related function. The pop-up window interface produced by the pop-up module 164 will be described with reference to the drawings.

The reproduction module 166 reproduces a general broadcast signal received by the broadcast receiving module 162 or reproduces the video clip. When the video clip is to be reproduced, the reproduction module 166 reproduces it in correspondence to a time selected by a user. Furthermore, the reproduction module 166 reproduces the video clip according to at least one of a direct reproduction method, a reproduction method during displaying of a broadcast, and a reproduction method during conversion of a channel.

According to the direct reproduction method, the reproduction module 166 reproduces a video clip according to a user's selection. That is, the reproduction module 166 reproduces a selected video clip stored in the memory 170 upon input by a user, for example by using a key input unit 130. More specifically, the direct reproduction method includes a stack storing process for storing a received video clip and a view process for reproducing the stored video clip. In an exemplary implementation of the direct reproduction method, the reproduction module 166 provides a menu screen for selection of the video clip and a list screen. Within the list screen, the reproduced video clip may be arranged with other video clips according to a user preference, for example according to the number of times the video clip has been reproduced or a specific designation of a user. Furthermore, as will be described in more detail below, the video clips may be selected based on the reproduction priority during the reproduction method while displaying a broadcast or during the reproduction method while converting a channel.

According to the reproduction method during displaying of a broadcast, a video clip is reproduced while displaying a broadcast by using the data reproducing apparatus 100. More particularly, with reference to FIG. 4, the reproduction module 166 can determine the playing time of a current program, the start time of the current program, the end time of the current program, and the start time of a next program, by acquiring program-related information such as PSI/SI information from the broadcast receiving module 162 while displaying a broadcast. The reproduction module 166 can also determine an advertisement time inserted between the current program and the next program. Accordingly, after the current program is completed, the reproduction module 166 may display the video clip in a Picture-in-Picture (PIP) format during reproduction of the advertisement. When the advertisement is completed and the next program starts, the reproduction module 166 may stop reproduction of the video clip. However, the reproduction module 166 may not stop reproduction of the video clip even if the next program starts, and can continuously reproduce the video clip in the PIP format without stopping the reproduction of the video clip.

According to the reproduction method during conversion or changing of a channel, the video clip is reproduced while a channel is being converted. More particularly, if an input signal for conversion of a channel is generated, for example by a key input, the reproduction module 166 reproduces the video clip and displays it on the display unit 120. Further, when the conversion of the channel is completed, the reproduction module 166 may stop reproduction of the video clip altogether. Alternatively, after the conversion of the channel is completed, the reproduction module 166 may continue to reproduce the video clip in the PIP format. The reproduction of the video clip in the PIP format may be stopped in correspondence to selection by a user, i.e. an input signal of the key input unit 130.

The key input unit 130 produces a key input signal needed in the data reproducing apparatus 100 and transfers it to the control unit 160. The key input unit 130 can produce a variety of key signals based on the keys of the key input unit. For example, the key input unit 130 can produce a check key signal according to generation of the pop-up window, a direction key signal needed during search for a plurality of video clips, a key signal corresponding to numbers, letters, and special letters, a function key signal for performing a predetermined function. Especially, the key input unit 130 of the present invention can produce a key signal for checking storage of the video clip and the update information, a key signal for activating the broadcast receiving module 162, a broadcast signal received according to the broadcast receiving module 162, and a signal needed in reproduction of the video clip.

The audio processing unit 140 reproduces an audio signal among the broadcast signals received as the broadcast receiving module 162 is activated. For this, the audio processing unit 140 may include a speaker SPK. When the data reproducing apparatus 100 provides a function of collecting an audio signal, the audio processing unit 140 may include a microphone MIC. Especially, the audio processing unit 140 of the present invention can produce an audio signal for alerting reception of the video clip and the update information.

The memory unit 170 stores a downloaded video clip, update information, a broadcast signal, etc., including an application program needed for the operation according to an exemplary embodiment of the present invention, and includes the reproduction module 166 for reproduction of the broadcast signal and the video clip. The memory 170 may include a program region and a data region.

The program region stores an Operating System (OS) for booting the data reproducing apparatus, a program for the reproduction module 166 needed for reproduction of a video clip and a broadcast signal, programs related to other optional functions of a target terminal 100 such as a camera function and a voice reproducing function, and an application program needed for reproduction of an image or a moving picture. When functions are activated corresponding to a request of a user, the data reproducing apparatus 100 provides the functions by using corresponding application programs under the control of the control unit 160. For example, the program region includes the pop-up module 164 alerting reception of the video clip and the update information, a broadcast receiving module 162 for controlling the broadcast receiver 110 receiving a signal transferred from the broadcasting network server 230, and a reproduction module for reproduction of the video clip and the broadcast signal. The modules are loaded in the control unit 160 to perform the functions.

The data region is provided for storing data that is generated according to use of the data reproducing apparatus 100. The data region also stores the video clip and the update information that are transferred by the broadcast network server 230. Further, the data region may store the broadcast signal transferred by the broadcasting network server 230. The data region can also store user data related to various optional functions of the data reproducing apparatus 100, such as a photographed image or a moving picture from a camera function, phonebook data, audio data, and information corresponding to the contents or user data.

More particularly, the video clip may include various images and flash files that are provided by the service providing server 210 and may have ranking information. That is, the service providing server 210 can associated a priority ranking with the video clip by referencing a vote or a number of times the video clip has been downloaded by various users. Accordingly, the service providing server 210 can sort a video clip having a large vote or a large number of downloads as having a high priority of the video clips as a predetermined priority range, e.g. "Top 10" to transfer it to the data reproducing apparatus 100. Therefore, the video clip may be the data received according to the ranking information.

Furthermore, the video clip may be the data sorted according to categories. More particularly, the video clip may include a plurality of clips including various categories such as a sports category, a move category, a music video category, a comedy category, etc. Accordingly, when a user wants to reproduce the video clip, the reproduction module 166 can display the list of various clips included in the category prior to the others.

The video clip can also set Digital Rights Management (DRM). That is, the service providing server 210 can set the DRM with respect to the clip requiring setting of the DRM, among the video clips, and provide it to the data reproducing apparatus 100. Accordingly, when the DRM is set with the video clip, the data reproducing apparatus 100 can alert it. That is, the pop-up module 164 can control display of the DRM setting with respect to the set video clip and can provide address information for purchase of a license when a user requests reproduction of the DRM set video clip. The data reproducing apparatus 100 may be connected to the service providing server 210 to perform the purchase of the license.

The display unit 120 displays various broadcast data provided by the broadcasting network server 230. Here, the broadcast data may be the above-mentioned video clip, the broadcast signal, etc. The video clip may be a moving picture having a time duration, e.g. from several seconds to several minutes. The broadcast signal may be a general broadcast provided by the broadcasting network server 230, and may be a real time broadcast. In an exemplary implementation, when the display unit 120 receives the video clip and the update information, it can alert of the receipt by displaying a pop-up window. The screen interface of the display unit 120 including the pop-up window will be described later with reference to the drawings.

The data reproducing apparatus 100 may include the mobile communication unit 150 when it also functions as a mobile communication terminal. The mobile communication unit 150 can control activation of the broadcast receiving module 162 for receiving the updated video clip on the basis of the message information. For this, the message information transferred by the broadcasting server 230 may contain the update information defining the update of the video clip. In other words, when the mobile communication unit 150 receives the message information containing the update information, it alerts of the receipt to the control unit 160. Then, the control unit 160 can set the broadcast receiver by activating the broadcast receiving module 162, and can receive the video clip transferred by the broadcasting network server 230.

When a video clip is to be transferred to another terminal, the mobile communication unit 150 can provide a message with corresponding information to transfer the message to the other terminal. Accordingly, the other terminal can receive the message and can activate the broadcast receiving module installed in the other terminal to receive the video clip. When a user is to transfer the video clip to another terminal, the mobile communication unit 150 can transfer the multimedia message containing the video clip to the other terminal. Accordingly, the other terminal can directly receive the video clip from the data reproducing apparatus 100 to reproduce it. When the video clip sets the DRM, the mobile communication unit 150 can form the service providing server 210 and a communication channel under the control of the control unit 160 to acquire the corresponding license. Then, the mobile communication unit 150 can transmit and receive the license request signal, the certification related signal, and the license.

As mentioned above, the data reproducing apparatus 100 receives the video clip and update information that are transferred by the broadcasting network server 230 and alerts the information about it to the display unit 120 by using a pop-up window. The data reproducing apparatus 100 reproduces the received and stored video clip at a time desired by a user. That is, the data reproducing apparatus 100 directly reproduces the video clip when a user directly requests reproduction. When a user wants to watch a broadcast, the data reproducing apparatus 100 acquires an advertisement time and reproduces the video clip in the form of PIP at a time when the advertisement is reproduced. When a user switches a channel, the data reproducing apparatus 100 can reproduce the video clip on the channel conversion screen.

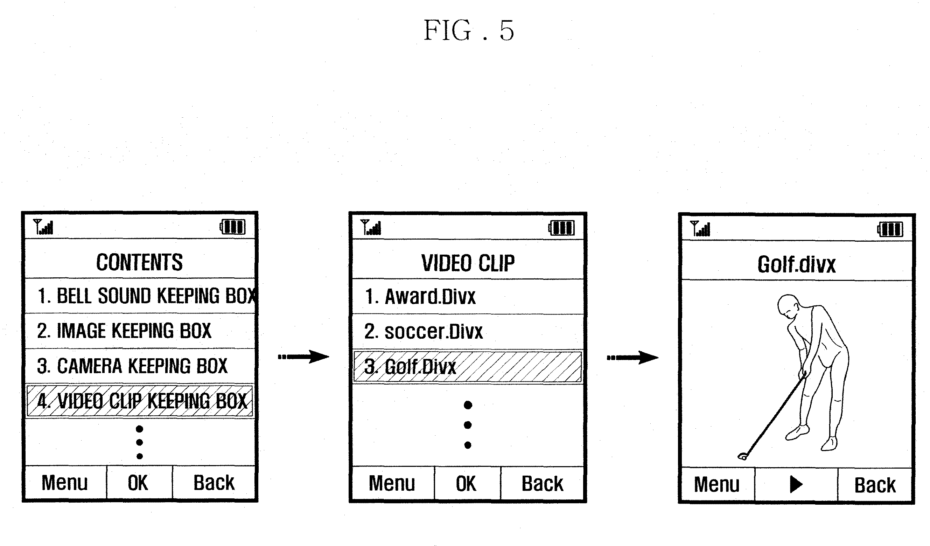

Hereinafter, a screen interface according to an exemplary embodiment of the present invention will be described in detail with reference to FIGs. 5 to 9.

FIG. 5 is a view illustrating an exemplary screen interface according to a direct video clip reproduction method.

Referring to FIG. 5, the display unit 120 displays a content list through a menu by selection of a user in order to directly reproduce the video clip. The content list contains various lists such as a bell sound keeping box, an image keeping box, a camera keeping box, and a video clip keeping box. Here, if a key input signal for selecting the video clip keeping box is generated, the display unit displays various lists contained in the video clip, such as "Award.Divx, Soccer.Divx, Golf.Divx".... The video clip may be one transferred by the broadcasting network server through a file transfer channel. If a clip in the video clip list, such as "Golf.Divx", is selected, the reproduction module 166 reproduces a screen corresponding to the selected video clip.

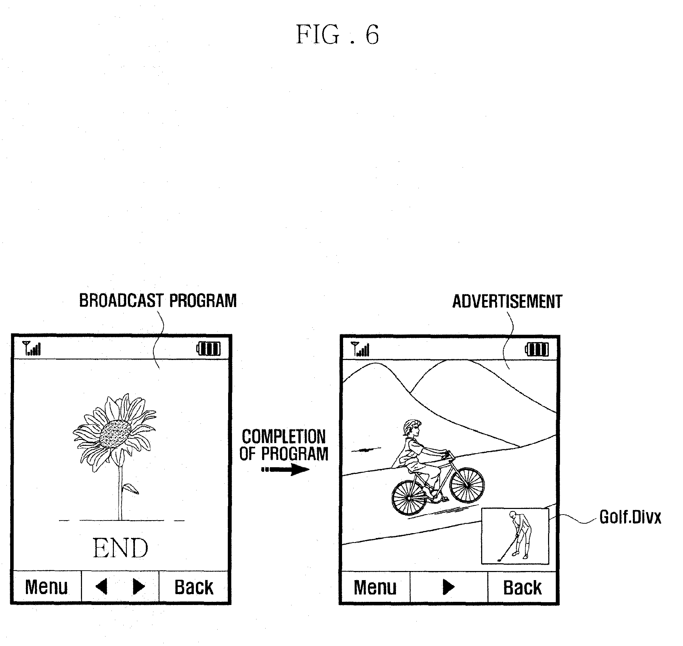

FIG. 6 is a screen interface illustrating an exemplary method of reproducing the video clip while displaying a broadcast.

Referring to FIG. 6, the display unit 120 receives and displays a currently broadcast program. The broadcast program is one received by a channel provided by the broadcasting network server 230. As described previously with reference to FIG. 4, the display unit reproduces an advertisement following the broadcast program, that is, when the broadcast program is complete. While the advertisement is being reproduced, the display unit displays a screen on one side thereof within which is reproduced a video clip. That is, the display unit displays an image corresponding to an advertisement on the entire screen, and reproduces the video clip in the PIP format by allocating a region of the advertisement image. Here, the video clip is one already received and stored by the broadcast receiving module 162 in the video clip memory region. The reproduction order of the video clip may be varied according to the reception order or the ranking information of the video clip. When the reproduction time of the advertisement image is longer than that of the video clip, if the reproduction of the video clip is completed, the original advertisement image is displayed in the region where the video clip has been reproduced. When the reproduction time of the video clip is longer than that of the advertisement image, the display unit can maintain the reproduction in the PIP format while the following broadcast program is being reproduced. The video clip reproduced in the PIP format can finish or maintain reproduction thereof according to selection by a user.

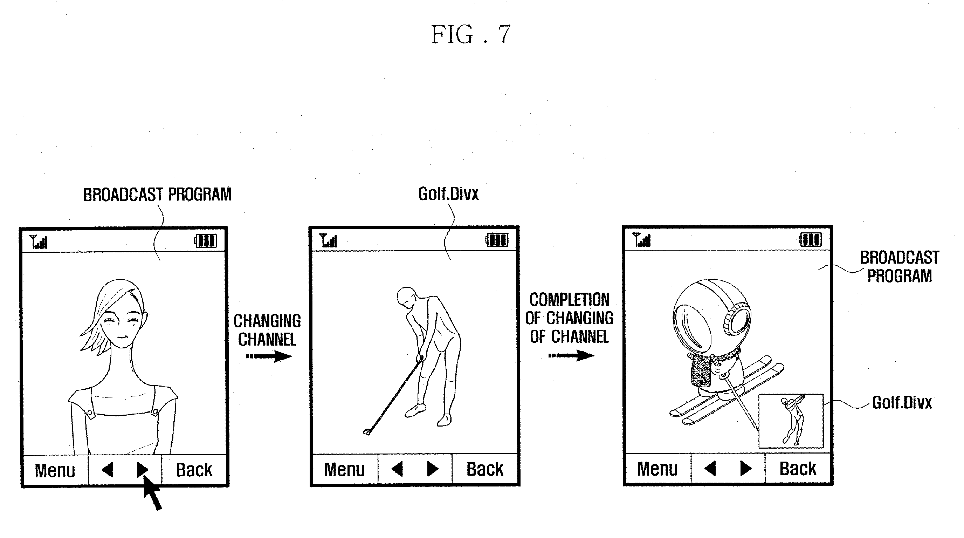

FIG. 7 is a screen interface illustrating an exemplary method of reproducing a video clip during conversion of a channel.

Referring to FIG. 7, the reproduction of a video clip can be displayed while changing a channel. That is, while the display unit displays a currently received broadcast program, a channel changing signal may be received. For example, a channel changing signal may be input from the key input unit 130. When the channel conversion signal is received and channel conversion is in process, the reproduction module 166 displays a video clip stored in the memory 170 on the front surface of the display unit. If a broadcast signal is received from the changed channel such that the change of the channel is completed, the reproduction module 166 reproduces the broadcast program received from the changed channel. Furthermore, the display unit can reproduce the video clip in the PIP format during the reproduction of the broadcast program of the changed channel. Here, the video clip reproduced in the broadcast program in the PIP format can finish or maintain reproduction thereof according to selection of a user, i.e. an input signal of the key input unit 130.

Although the reproduction module 166 selects the video clip stored in the memory unit 170 according to a ranking order or arbitrarily to reproduce it in FIGs. 6 and 7, the present invention is not limited thereto. That is, the reproduction module 166 can assist a user select and watch a video clip by displaying a list screen for selection of the video clip at an advertisement starting time or a channel conversion starting time. The display of the list screen can be optionally provided.

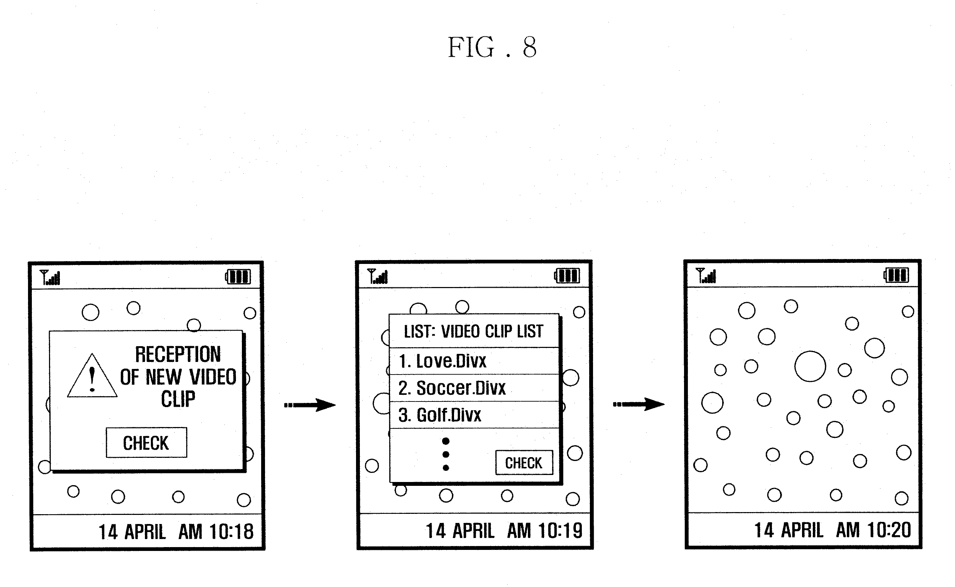

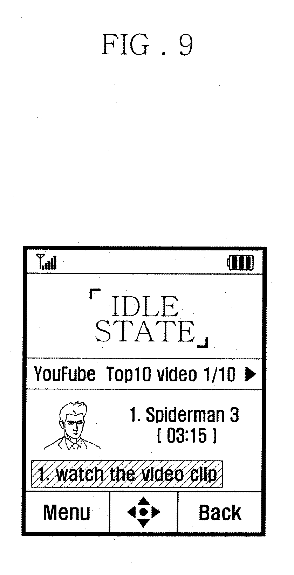

FIGs. 8 and 9 are exemplary screens illustrating pop-windows of the present invention.

Referring to FIG. 8, the pop-up module 164 allows the broadcast receiving module 162 to receive a new video clip and, when alerting of the receipt, displays it on the display unit 120 as a pop-up window. If a key input for checking the pop-up window is generated, the pop-up module 164 can display the corresponding list on the display unit 120 if a plurality of files exists in the newly received video clip. The pop-up window and list displayed on the display unit 120 is automatically removed after lapse of a time period without any input of a separate check key, and the screen can return to the previous screen such as an idle screen.

Referring to FIG. 9, the pop-up module 164 can display information about the received video clip on one side of a screen such as an idle screen. That is, the display unit can display a name of the service providing server providing the video clip and the characteristics of the video clip such as the ranking information and a category. The display unit can display the number of clips of the video clip. Further, the display unit can display detailed information of the selected video clip. That is, the display unit can display the name of the selected video clip, a representative image, a reproduction time, a size, setting of the DRM, etc. If a reproduction request signal for the video clip among the detailed information displayed on the display unit is generated, the reproduction module 166 can reproduce the corresponding video clip. The display unit can display the link information for connection to the service providing server providing the video clip.

Until now, the data reproducing apparatus 100 and the screen interfaces according to exemplary embodiments of the present invention have been described. Hereinafter, a data reproducing method according to an exemplary embodiment of the present invention will be described.

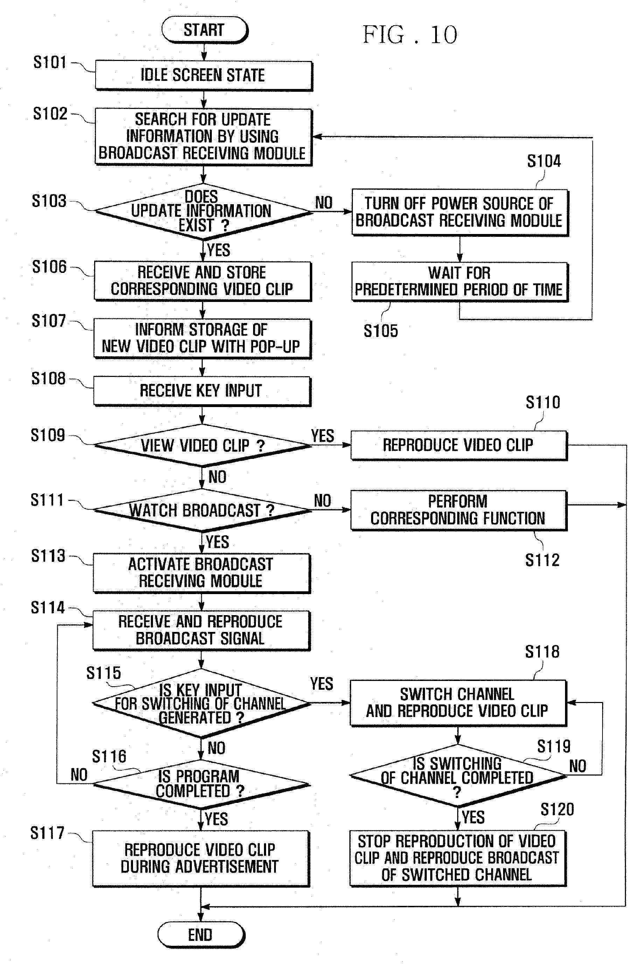

FIG. 10 is a flowchart for illustrating a data reproducing method according to an exemplary embodiment of the present invention.

Referring to FIG. 10, according to the data reproducing method of the present invention, the data reproducing apparatus 100 is first turned on to be initialized and the display unit 120 displays an idle screen in step S101. The data reproducing apparatus 100 searches for update information by using the broadcast receiving module 162, with the idle screen being displayed in step S 102.

In step S102, the broadcast receiving module 162 can be activated at certain intervals under the control of the control unit 160 or can be activated when it receives a message informing that update information has been externally generated. The activated broadcast receiving module 162 examines a file transfer channel by controlling the broadcast receiver 110 and determines whether update information exists in step S103. If update information does not exist, the control unit 160 can save electric power by turning off the broadcast receiving module 162 in step S104. Next, the control unit 160 waits for a period of time in step S105, and then returns to step S102.

In another exemplary implementation, the broadcast receiving module 162 can be activated as a user of the data reproducing apparatus 100 watches a broadcast. That is, when a user inputs a key input signal for activating the broadcast receiving module 162, for example, when a key input for displaying a broadcast is generated, the broadcast receiving module 162 is activated to perform the steps following S103.

In step S103, when update information exists, the activated broadcast receiving module 162 receives a video clip transferred through a file transfer channel by the broadcasting network server 230 and transfers it to the memory to store it in step S106. In step S107, the broadcast receiving module 162 alerts a user using the pop-up module 164 that a new video clip is stored. Step S107 can be performed before or simultaneously with the receiving and storing of the video clip in step S106. Here, the step of receiving and storing the video clip performed in step S106 can be omitted or can be replaced by viewing of an image or a preview image of the video clip. More particularly, the step of receiving and storing the video clip may be provided as a setting menu so that a user can select it. That is, the setting menu may include a menu for automatically receiving and storing the video clip, a menu for automatically denying reception and storage of the video clip, and a menu for reception and storage by selection of a user after performing a preview function. The preview setting menu can control a representative image or a preview image of the video clip to be displayed on the display unit, with the broadcast receiving module temporarily storing the video clip. Accordingly, the data reproducing apparatus 100 can produce a key input for storing the video clip after display of the representative image or the preview image is performed in advance according to selection of a user.

The step of alerting the pop-up module 164 performed in step S 107 can be omitted according to selection of a user. Therefore, the pop-up module 164 may not produce a separate pop-up window in the display unit even if a new video clip is stored. It is also preferable that the broadcast receiving module 162 activated in steps S106 and S 107 is converted to a power off mode, i.e. a sleep mode to save power.

After step S107, the control unit 160 examines generation of a key input in step S108, and determines whether the key input indicates viewing of the video clip in step S109. In step S109, in the case of a key input signal for viewing the video clip, the control unit 160 reproduces the video clip stored in the memory 170 by using the reproduction module 166 in step S 110. If the key input is not a signal for viewing the video clip, the control unit 160 determines whether the key input is a key input for displaying a broadcast in step S111. Step S111 may be omitted when a user activates the broadcast receiving module to display a broadcast in step S102. In step S 111, the control unit 160 performs a function corresponding to the key input if the key input is not one for displaying a broadcast in step S112. The corresponding function includes various functions such as a function provided by the data reproducing apparatus 100, for example, a camera function, an MP3 reproducing function, a message function, and a mobile communication function. If instead it is determined in step S111 that the generated key input is one for displaying a broadcast, the control unit 160 activates the broadcast receiving module 162 in step S 113. The broadcast receiving module 162 receives a broadcast signal from a broadcast channel corresponding to a key input and reproduces the broadcast signal through the reproduction module 166 in step S 114.

Next, the control unit 160 determines whether a key input is generated for changing a channel in step S115. If it is determined in step S115 that the channel converting key input is not generated, it is determined whether the current program is completed in step S 116. In step S 117, when the currently broadcasted program is completed, the control unit 160 reproduces the video clip stored in the memory 170 in the PIP format on the display unit on which an advertisement is displayed during the following advertisement, by controlling the reproduction module 166. In step S 116, the control unit 160 can acquire completion of the current program and timing for advertisement from program-related information, i.e. PSI/SI information. Meanwhile, when it is determined that the current program is not completed in step S 116, the process returns to step S 114 by the control unit 160.

If it is determined in step S 115 that a key input according to conversion of a channel is generated, the control unit 160 performs conversion of the channel, and the video clip is reproduced by controlling the reproduction module 166 in step S118. That is, the reproduction module 166 controls the video clip stored in the memory 170 to be displayed on the display unit 120, and the broadcast receiving module 162 performs the channel converting process by using background processing. The video clip displayed on the display unit 120 may be displayed on the entire display unit 120 or may be displayed partially on the display unit 120.

Next, the control unit 160 determines whether the conversion of the channel is completed in step S119. If the channel conversion is completed, the control unit 160 stops reproduction of the video clip and reproduces the broadcast signal or the program received through the converted channel in step S120. Here, the control unit 160 may control the reproduction of the video clip to be maintained in the PIP format when the program of the converted channel is reproduced. If it is determined in step S 119 that the channel switching is not completed, the control unit 160 returns to step S 118 to continue the channel switching and video clip reproduction.

The video clip reproduced in at least one of steps S 117 and S 118 may be reproduced according to a priority or according to arrangement of a user preference list. That is, the reproduced video clip may be arranged in the user preference list according to the number of reproductions or designation by a user, and the arranged video clips determined by the priority of reproduction of the video clips may be displayed in order during reproduction while displaying a broadcast or converting a channel.

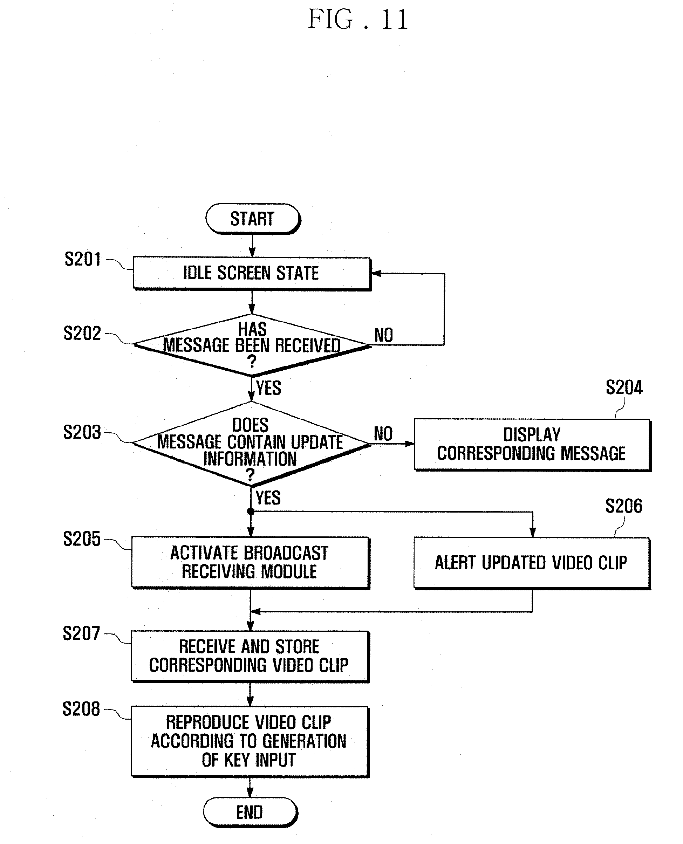

FIG. 11 is a flowchart for illustrating a data reproducing method according to another exemplary embodiment of the present invention.

Referring to FIG. 11, the data reproducing apparatus 100 is initialized as electric power is supplied and displays an idle screen in step S201. In the idle screen state, the control unit 160 determines whether a message is received in step S202. The message may be received using the mobile communication unit 150 of the data reproducing apparatus 100 after the message is transferred through a mobile communication network by the service providing server 210. If a message is not received, the control unit 160 controls the data reproducing apparatus 100 to return to step S201.

When a message is received in the step S202, the control unit 160 determines whether the message contains update information in step S203. In the case of a general message that does not contain update information, the corresponding message is displayed according to a message service function in step S204.

If it is determined in step S203 that the message contains update information, the control unit 160 activates the broadcast receiving module 162 in step S205, and transfers the alert about the updated video clip to the pop-up module 164 in step S206. In step S206, if the pop-up module 164 receives the alert, the information about it may be displayed on the idle screen.

In step S207, the broadcast receiving module 162, activated in step S205, receives the video clip from the file transfer channel provided by the broadcasting network server 230 and transfers it to the memory 170 for storage.

Next, the control unit 160 reproduces the video clip according to generation of a key input in step S208. In step S208, as mentioned above, the control unit 160 can reproduce the video clip according to a direct reproduction method, a reproduction method during displaying of a broadcast, and a reproduction method during conversion of a channel.

According to the data reproducing apparatus and the data reproducing method according to exemplary embodiments of the present invention, the broadcasting network server 230 can receive the video clips transferred through the file transfer channel and can perform an alert. Exemplary embodiments of the present invention receive the video clip according to a direct reproduction method, a reproduction method during displaying of a broadcast, and a reproduction method during conversion of a channel by selection of a user. The methods may be provided as a preset menu item and may be performed independently or complexly according to a function selected by a user.

As mentioned above, in a data reproducing apparatus and a data reproducing method according to exemplary embodiments of the present invention, the broadcasting network server may receive and store the data provided through the file transfer channel, such as a video clip, perform an alert of the stored data, and select and designate the reproduction time of the data by a user.

While exemplary embodiments of the present invention have been shown and described in this specification, it will be understood by those skilled in the art that various changes or modifications of the embodiments are possible without departing from the spirit and scope of the invention as defined by the appended claims and their equivalents.

## Claims

1. A data reproducing method comprising:
examining a file transfer channel of a broadcasting network using a broadcast receiving module;
receiving data transferred through the file transfer channel;
storing the received data; and
reproducing the stored data,
wherein the examining of the file transfer channel comprises at least one of activating the broadcast receiving module when a message containing update information of data is received through a mobile communication network and activating the broadcast receiving module at certain intervals.

2. The data reproducing method of claim 1, wherein the broadcasting network establishes channels according to a Digital Video Broadcast-Handheld (DVB-H) system, and the file transfer channel uses a file delivery over unidirectional transport (FLUTE) protocol.

3. The data reproducing method of claim 1, wherein the data comprises at least one video clip, and further wherein the video clip contains at least one of ranking information and category information that are assigned according to a standard.

4. The data reproducing method of claim 1, wherein the receiving of the data comprises:
receiving update information of data; and
receiving data on the basis of the update information.

5. The data reproducing method of claim 4, wherein the update information comprises Electronic Service Guide (ESG) information.

6. The data reproducing method of claim 1, wherein the reproducing of the stored data comprises:
displaying a list of stored data;
selecting desired data in the list; and
reproducing the selected data.

7. The data reproducing method of claim 1, further comprising:
issuing an alert indicating reception of the data.

8. A data reproducing method comprising:
examining a file transfer channel of a broadcasting network using a broadcast receiving module;
receiving data transferred through the file transfer channel;
storing the received data; and
reproducing the stored data,
wherein the stored data is reproduced when, during reception and display of an external broadcast signal, the currently displayed broadcast signal is an advertisement.

9. The data reproducing method of claim 8, wherein the reproducing of the data while displaying the advertisement is performed in a Picture In Picture (PIP) format by allocating a region on an advertisement image.

10. A data reproducing method comprising:
examining a file transfer channel of a broadcasting network using a broadcast receiving module;
receiving data transferred through the file transfer channel;
storing the received data; and
reproducing the stored data,
wherein the stored data is reproduced during channel switching in response to a request for channel switching when the request is generated during display of a broadcast.

11. The data reproducing method of claim 10, wherein the reproducing of the stored data comprises at least one of stopping the reproducing of the reproduced data after completing the switching of the channel and reproducing the reproduced data in a PIP format on a broadcast image corresponding to the switched channel after completing the switching of the channel.

12. A data reproducing apparatus comprising:
a broadcast receiver for examining a file transfer channel of a broadcasting network and for receiving data transferred through the file transfer channel of the broadcasting network;
a memory for storing the received data;
a control unit for controlling the stored data to be displayed; and
a display unit for displaying data,
wherein the control unit comprises:
a broadcast receiving module for controlling setting of the frequency of the broadcast receiver and for transferring the received data to the memory;
a pop-up module for issuing an alert indicating reception of the data; and
a reproduction module for reproducing at least one of a broadcast signal received by the broadcast receiver and the received data.

13. The data reproducing apparatus of claim 12, further comprising:
a mobile communication unit for receiving a message including update information of data through a mobile communication network and for transferring the received message to the pop-up module.

14. The data reproducing apparatus of claim 13, wherein the pop-up module activates the broadcast receiving module when a message including update information is received.

15. The data reproducing apparatus of claim 13, wherein the pop-up module, upon reception of data from at least one of the broadcast receiving module and the mobile communication network, displays the data-related information on an idle screen.

16. The data reproducing apparatus of claim 13, wherein the pop-up module comprises:
a dynamic graphic engine comprising a Scalable Vector Graphics (SVG)-Tiny supporting vector graphics, a rendering effect unit supporting a rendering effect on an image, and a Graphical User Interface (GUI) control unit;
a pop-up controller for controlling production and display of a pop-up window;
an alert unit for issuing an alert indicating an update of the data to the broadcast receiving module;
a bi-directional service unit supporting a link connected to a server providing the data; and
a broadcast receiving module adaptor for transmission and reception of a signal with the broadcast receiving module.

17. The data reproducing apparatus of claim 13, wherein the reproduction module reproduces the data by using at least one of:
a method of storing the received data and then directly reproducing the stored data according to selection of a menu and a list;
a method of reproducing the data in a Picture In Picture (PIP) format during an advertisement while displaying a broadcast; and
a method of reproducing the data during switching of the channel.

18. The data reproducing apparatus of claim 13, wherein the broadcast receiving module receives update information of data and controls the broadcast receiver to receive the data on the basis of the update information.

19. The data reproducing apparatus of claim 18, wherein the update information comprises electronic service guide (ESG) information.

20. The data reproducing apparatus of claim 12, wherein the data includes at least one video clip, and further wherein the video clip contains at least one of ranking information and category information that are assigned according to a standard.

21. The data reproducing apparatus of claim 12, wherein the broadcasting network forms a channel according to a Digital Video Broadcasting-Handheld (DVB-H) method, and the file transfer channel uses a file delivery over unidirectional transport (FLUTE) protocol.
